# EUROPÄISCHE PATENTSCHRIFT

(11) **EP 2 832 627 B1**
(45) Veröffentlichungstag und Bekanntmachung des Hinweises auf die Patenterteilung: **07.09.2016**
(21) Anmeldenummer: 14001548.8
(22) Anmeldetag: 02.05.2014
(51) Int. Cl.: B62D 33/06, B62D 65/02

(54) **Verfahren zum Aufbau eines Nutzfahrzeug-Fahrerhauses**
Method for constructing a driver's cab of a commercial vehicle
Procédé de montage d'une cabine de conducteur de véhicule utilitaire

(30) Priorität: 02.08.2013 DE 102013012927
(43) Veröffentlichungstag der Anmeldung: 04.02.2015
(73) Patentinhaber: MAN Truck & Bus AG, 80995 München (DE)
(72) Erfinder: Scherr, Stefan, 85221 Dachau (DE)
(74) Vertreter: v. Bezold & Partner Patentanwälte - PartG mbB

(56) Entgegenhaltungen:
- DE-A1- 19 523 498
- DE-A1- 19 606 779
- DE-A1-102007 024 804
- US-A- 4 874 200

## Beschreibung

Die Erfindung betrifft ein Verfahren zum Aufbau eines Fahrerhauses eines Nutzfahrzeugs, beispielsweise eines Lastkraftwagens.

Fahrerhauskabinen für Lastkraftwagen bestehen aus einem Boden bzw. Bodengruppen, einem Dach, Seitenwänden sowie einer Frontwand und einer Rückenwand. Aus Stabilitätsgründen können diese Wände auch in zweischaliger Bauweise, bestehend aus einem Innenblech und einem Außenblech, ausgeführt sein. Bei einem aus dem Stand der Technik bekannten Verfahren werden im Rohbau die oben genannten einzelnen Wandelemente des Fahrerhauses als geformte Bleche zum Fahrerhaus verschweißt. Hierbei können einzelne Elemente wie Systemträger oder das Dach auch erst im Montageband im vorgruppierten Zustand an das Restfahrerhaus montiert werden.

Das anschließende Rohbau-Finish, die Oberflächenbehandlung, Lackierung und auch die Montage geschieht am, unter oder im Fahrerhaus. Hierbei sind vor allem die Arbeiten unter und im Fahrerhaus personell und anlagentechnisch aufwändig und daher nicht kosteneffizient. Des Weiteren erfordern derartige Arbeiten aus ergonomischen Gesichtspunkten ungünstige Arbeitshaltungen, insbesondere bei den Arbeiten unter und im Fahrerhaus.

Aus der DE 10 2009 004 153 A1 ist ein Verfahren zum Aufbau eines Fahrerhauses eines Lastkraftwagens bekannt, wobei ein Teil des Fahrerhauses, bestehend aus der Frontwand, den Seitenwänden, der Dachwand und der Bodenwand, jedoch noch ohne Rückwand, konventionell als Rohbau gefügt und hergestellt wird. Nach dem Rohbau wird dieses Fahrerhaus lackiert, und anschließend werden die Fahrerhausinnenausstattungen montiert. Gleichzeitig wird die Rückwandmontage fertig vorbereitet und erst bei der Bandmontage in der Montagelinie mit dem restlichen Fahrerhausmodul zum kompletten Fahrerhaus verbunden. Der Fahrerhausrohbau ohne Rückwandmontagemodul ermöglicht einen verbesserten Zugang zum Inneren des Fahrerhauses. Jedoch bleibt der verfügbare Arbeitsplatz im Fahrerhausinneren zur Montage der Innenausstattung weiterhin beschränkt. Der eingeschränkte Zugang zur Unterseite des Fahrerhauses wird ebenfalls nicht verbessert.

Ferner wird in der DE 10 2009 053 750 A1 ein Verfahren zum Aufbau eines Nutzfahrzeug-Fahrerhauses vorgeschlagen, bei dem auf dem Dachmodul des Fahrerhauses ein Mitteldachmodul vorgesehen ist, das derart in den Dachrahmen einsetzbar ist, dass sich das Mitteldachmodul in seiner Einbaulage an das Heckdachteil sowie die Seitendachteile anschließt und sich vom Heckdachteil bis in einen Bereich oberhalb einer Frontscheibe des Nutzfahrzeugs erstreckt. Durch die spezielle Ausgestaltung des Mitteldachmoduls kann auf zusätzliche Versteifungselemente im Bereich des Daches verzichtet werden. Weiterhin kann das Mitteldachmodul bereits vorgruppiert werden, um den Montageaufwand beim Aufbau des Fahrerhauses zu reduzieren. Nachteilig an diesem Verfahren ist jedoch ebenfalls das zeitaufwändige und unergonomische Arbeiten im Inneren und unterhalb des Fahrerhauses zur Montage der Innenausstattung.

Aus der DE 10 2007 024 804 A1 ist ein selbsttragendes Karosserie-Struktur-Verbundbauteil-Modul bekannt, das aus einem in sich stabilen und strukturstreifen Struktur-Träger mit einer daran unlösbar angeformten integrierten Außenhaut, vorzugsweise einer Lackfolie und mit einer auf der von der Außenhaut wegweisenden Seite des Struktur-Trägers unlösbar an diesem angeformten, als Fahrzeuginnenraumverkleidung ausgebildeten integrierten Dekor-Innenschicht bekannt. Zum Aufbau eines Nutzfahrzeug-Fahrerhauses werden diese Karosserie-Struktur-Verbundbauteil-Module an eine Fahrzeug-Rohbau-Karosserie-Struktur montiert beispielsweise einer Space-Frame-Struktur. Ferner eignet sich das vorgeschlagene Karosserie-Struktur-Verbundbauteil nicht zum Lackieren, so dass zur Farbgebung eine Lackfolie aufgebracht werden muss, was die Haltbarkeit der Farbgebung reduziert.

Es ist somit eine Aufgabe der Erfindung, ein Verfahren zum Aufbau eines Nutzfahrzeug-Fahrerhauses bereitzustellen, mit dem Nachteile der aus dem Stand der Technik bekannten Verfahren vermieden werden können. Es ist insbesondere eine Aufgabe der Erfindung, ein Verfahren zum Aufbau eines Nutzfahrzeug-Fahrerhauses bereitzustellen, das eine effizientere Nutzung der Arbeits- und Anlagenressourcen ermöglicht sowie die erforderlichen Montagearbeiten aus ergonomischer Sicht verbessert.

Diese Aufgaben werden mit einem Fahrerhaus für ein Nutzfahrzeug gemäß dem Hauptanspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung umfasst die allgemeine technische Lehre, dass eine Farbgebung für die Einzelwände des Fahrerhauses, umfassend eine Frontwand, Seitenwände, eine Rückwand, einen Boden und ein Dach, vor dem Zusammenfügen der Einzelwände zu dem Nutzfahrzeug-Fahrerhaus erfolgt. Der Begriff Farbgebung im Sinne dieser Erfindung umfasst einen Verarbeitungsschritt durch den die Einzelwand die spätere Farbe des Fahrerhauses erhält. Eine Farbgebung kann beispielsweise durch Lackieren erfolgen. Erfindungsgemäß kann die Farbgebung jedoch auch dadurch erfolgen, dass bereits vorbeschichtete Einzelwände bereitgestellt werden oder dass die Einzelwände aus einem bereits vorgefärbten Werkstoff, beispielsweise einem vorgefärbten Kunststoff, hergestellt werden. Der Begriff Einzelwand im Sinne dieser Erfindung umfasst einschalige Wandelemente, zweischalige Wandelemente, geformte Dachkonstruktionen und typische aus dem Stand der Technik bekannte Bodengruppen für Nutzfahrzeuge.

Erfindungsgemäß umfasst das Verfahren zum Aufbau eines Nutzfahrzeug-Fahrerhauses, insbesondere eines Lastkraftwagen-Fahrerhauses, daher die Schritte: Bereitstellen von Einzelwänden des Fahrerhauses, umfassend eine Frontwand, Seitenwände, eine Rückwand, einen Boden und ein Dach; und Zusammenfügen der Einzelwände zu dem Nutzfahrzeug-Fahrerhaus, wobei eine Farbgebung der Einzelwände vor dem Zusammenfügen der Einzelwände zu dem Nutzfahrzeug-Fahrerhaus erfolgt. Dadurch wird ein zeitaufwendiger und fehleranfälliger Lackiervorgang am bereits zusammengeschweißten Fahrerhausrohbau vermieden. Dies hat den Vorteil, dass beispielsweise das zeitaufwendige Türöffnen und -schließen zum Erreichen des Türausschnittrahmens und anderer verdeckter Türflächen bei geschlossener Tür entfällt. Ferner wird das Aufbauverfahren dadurch weniger fehleranfällig, da eine Qualitätsminderung durch die oftmals relativ ungenaue Position der geöffneten Tür beim Lackieren vermieden wird. Ein weiterer Vorteil ist die Kosteneinsparung bei Investitionen, beispielsweise durch einfache Montagegestelle statt komplexer Bandwagen mit Hubfunktion.

Hierbei kann die Farbgebung der Einzelwände durch Lackieren der Einzelwände vor dem Zusammenfügen der Einzelwände zu dem Fahrerhaus erfolgen. Zumindest eine der Einzelwände wird vor dem Zusammenfügen der Einzelwände zu dem Nutzfahrzeug-Fahrerhaus lackiert und hierzu unterhalb einer oder einer Vielzahl von Lackierdüsen in horizontaler Richtung verfahren. Dies hat den Vorteil, dass die sonst notwendige, teure Roboterlackiertechnologie, z.B. mehrachsig verfahrbare Gelenkarmroboter mit angeordnetem Sprühkopf, durch eine vergleichsweise günstige Portallackierung ersetzt werden kann. Hierbei sind verschiedene Lackierpistolen oder Rotationsglocken entlang einer Führungsschiene in horizontaler Richtung angeordnet. Die Wandelemente fahren unter dieser Portallackierungsanlage in horizontaler Richtung hindurch, was einen gleichmäßigen und schnellen Farbauftrag ermöglicht. Es können auch alle Einzelwände vor dem Zusammenfügen lackiert werden.

Gemäß einer bevorzugten Ausgestaltungsform des Verfahrens kann zumindest eine der Einzelwände aus einem vorbeschichteten Blech gefertigt sein, wobei die Farbgebung für die Einzelwand mittels der Vorbeschichtung erfolgt. Dadurch kann auf eine zusätzliche Lackierung beim Fahrzeughersteller verzichtet werden.

Gemäß einer weiteren Variante kann zumindest eine der Einzelwände aus einem vorgefärbten Kunststoff oder einem vorgefärbten Verbundwerkstoff gefertigt sein, so dass auf eine zusätzliche Lackierung vollständig verzichtet werden kann. Bei einer vorteilhaften Variante dieser Ausgestaltungsform ist die Rückwand, die Front und/oder der Boden des Fahrerhauses aus einem vorgefärbten Kunststoff oder einem vorgefärbten Verbundwerkstoff gefertigt, da für diese Fahrerhauskomponenten die Anforderungen an das optische Erscheinungsbild geringer sind als bei den Seitenwänden. Da gemäß dem erfindungsgemäßen Verfahren kein Fahrhausrohbau durch Verschweißen der unlackierten Seitenwände gefertigt wird, sondern lediglich - sofern man an der zweischaligen Bauweise festhält - die Innen- und Außenwände in der Komponentenfertigung miteinander verbunden werden, eignet sich das erfindungsgemäße Verfahren in besondere Weise dazu, einzelne Wandelemente in einem Alternativwerkstoff anstatt in Stahlblech auszuführen, was zusätzliche Gewichts- und/oder Kostenvorteile ermöglicht.

Gemäß der vorstehend beschriebenen Modulbauweise können somit verschiedenen erfindungsgemäße Varianten zum Aufbau des Fahrerhauses realisiert werden. Eine Möglichkeit sieht vor, alle Einzelwände beim Fahrzeughersteller vor dem Zusammenfügen zu lackieren. Gemäß einer weiteren Möglichkeit können alle oder einzelne der Einzelwände bereits vorbeschichtet beim Fahrzeughersteller angeliefert werden. Wiederum eine andere Möglichkeit sieht vor, dass eine oder mehrere Einzelwände aus einem vorgefärbten Werkstoff hergestellt werden, so dass eine Lackierung dieser Teile entfällt.

Vorzugsweise erfolgt das Zusammenfügen der Einzelwände durch ein Niedertemperaturfügeverfahren, vorzugsweise durch ein Klebeverfahren. Dadurch kann verhindert werden, dass durch eine Temperatureinbringung, wie sie beispielsweise beim Schweißen entstünde, Bauteile beschädigt werden oder Formabweichungen entstehen.

Bei einer vorteilhaften Variante dieser Ausgestaltungsform werden die Frontscheibe, die Seitenscheiben und/oder die Heckscheibe des Fahrerhauses an einer Klebestation, an der auch das Zusammenfügen der Einzelwände zum Fahrerhaus erfolgt, an den Wänden des Fahrerhauses durch Kleben befestigt. Mit anderen Worten erfolgt das Anbringen der Scheiben während, unmittelbar vor oder unmittelbar nach dem Zusammenfügen des Fahrerhauses.

Des Weiteren ermöglicht das erfindungsgemäße Aufbauverfahren eine effizientere und flexiblere Ausstattung der Wandteile. Vorzugsweise erfolgt ein Ausstatten zumindest einer der bereitgestellten Einzelwände mit zumindest einem Ausstattungselement nach der Farbgebung der Einzelwände und vor dem Zusammenfügen der Einzelwände zum Fahrerhaus. Weiter vorzugsweise werden die Einzelwände vor dem Zusammenfügen der Einzelwände zum Fahrerhaus montagefertig vorgruppiert. Gemäß dieser Ausführungsvariante kann der Vorgruppierungsgrad erhöht werden, da einzelne Wandelemente teilweise oder komplett mit der entsprechenden Innen- und Außenausstattung vormontiert werden können, bevor das entsprechende Wandteil mit den anderen Wandteilen zum Fahrerhaus gefügt wird. Weiterhin entfällt die erschwerte Zugänglichkeit, das Ein- und Aussteigen in das Fahrerhaus und die Überkopfarbeit, da die einzelnen Wandteile zum Anbringen der Ausstattungselemente in einer ergonomischen Position aufgehängt bzw. positioniert werden können.

Ein besonderer Vorzug der Erfindung liegt darin, dass die Einzelwände in horizontaler Ausrichtung mit der Sichtfläche, die auch als A-Fläche bezeichnet wird, nach oben lackiert werden können. Dadurch wird eine Läuferbildung vermieden und ein besserer Oberflächenverlauf des Farbauftrags erzielt. Bei den aus dem Stand der Technik bekannten Verfahren werden die A-Flächen der Seitenwände und die Front des zusammengeschweißten Fahrerhausrohbaus in vertikaler Orientierung lackiert. Dies kann zu Läuferbildungen gerade an den für die Kunden gut sichtbaren Seitenflächen führen, was zu Rückläufern und Nachlackieraufwand führt. Diese Nachteile können durch die Lackierung der Einzelwandmodule in horizontaler Ausrichtung zuverlässig vermieden werden.

Ein weiterer Vorteil ist, dass die Lackierung in der horizontalen Ausrichtung einen größeren Lackauftrag pro Zeit ermöglicht und somit die Verarbeitungszeit weiter verkürzt.

Gemäß einer weiteren vorteilhaften Variante werden mindestens zwei Einzelwände gleichzeitig lackiert. Weiter vorteilhafterweise können alle Einzelwände gleichzeitig lackiert werden. Gemäß der vorliegenden Erfindung ist es ferner möglich, dass mindestens zwei Einzelwände beim Lackieren in paralleler Ausrichtung zueinander und in vertikaler Richtung versetzt lackiert werden. Dies ermöglicht einen besonders kompakten und platzsparenden Aufbau der Lackieranlage, bei der die Einzelwandelemente in vertikaler Richtung zueinander verschoben von verschiedenen Lackierdüsenanordnungen gleichzeitig lackiert werden.

Gemäß einer weiteren Variante können die Seitenwände zweischalig ausgebildet sein, mit einer ersten Schale aus Blech und einer zweiten Schale aus Kunststoff oder einem anderen Alternativwerkstoff.

Gemäß einer weiteren Ausführungsform der Erfindung erfolgt die Farbgebung für zumindest eine Einzelwand durch Tauchen in ein Farbbecken. Durch die in etwa einheitliche Größe der meisten Wände und der, im Vergleich zum Rohbau-Fahrerhaus, sehr reduzierten Ausmaße der Einzelwände ist der Einsatz eines vergleichsweise kleinen Tauchbeckens möglich. Diese Variante ist bei einer geringer Farbtonanzahl besonders vorteilhaft, da für jede Farbe ein eigenes Farbbecken benötigt wird. Vorzugsweise wird eine Farbgebung durch Tauchen in ein Farbbecken bei dem Bodenelement, der Frontwand und/ oder der Rückwand eingesetzt. Alternativ kann das Einfärben durch Eintauchen nur für die gängigsten Farben des Fahrerhauses eingesetzt werden, da in der Regel der Großteil der Fahrerhäuser in einer kleinen Anzahl verschiedener Farbtöne, beispielsweise in einem Weißton, lackiert wird.

Vorzugsweise werden die Einzelwände derart zueinander positioniert, dass in einem Kontaktbereich benachbarter Einzelwände ein Aufnahmebereich und/oder Spalt für das Klebemittel vorgesehen ist. Dies ermöglicht das Ausbilden einer stabilen, dichten Klebenaht. Ein weiterer Vorteil dieser Ausführungsform ist, dass dadurch ein (Teil-)Entfall der Feinnahtabdichtung erzielt werden kann, die sonst beim Fügen durch Schweißen notwendig ist. Der Wegfall eines separaten Herstellungsschritts der Feinnahtabdichtung ermöglicht eine weitere Kosten- und Zeiteinsparung bei der Fahrerhausfertigung. Zur Fixierung der relativ zueinander positionierten, vormontierten Seitenwände können diese bis zur Aushärtung der Klebeverbindungen mit Schrauben vorfixiert werden.

Ein weiterer Vorzug der Erfindung liegt darin, dass zumindest ein Wandelement fahrzeughersteller-extern bei einem Zulieferer lackiert und montagefertig vorgefertigt werden kann. Gemäß der vorliegenden Erfindung können die lackierten einzelnen Wandelemente des Fahrerhauses teilweise oder komplett montagefertig ausgestattet werden. Dies erhöht signifikant die Flexibilität bei der möglichen Übertragung von Montageinhalten an externe Zulieferer oder im Rahmen innerbetrieblicher Verlagerungen.

Zusammenfassend ermöglicht die vorliegende Erfindung einen schnelleren und flexibleren modularen Aufbau des Fahrerhauses von Nutzfahrzeugen. Durch das erfindungsgemäße Aufbauverfahren können einfachere Montagegestelle und kosteneffizientere Lackieranlagen eingesetzt werden. Das Ermöglichen einer horizontalen Lackierung der einzelnen Wandelemente verbessert die Qualität der Lackauftragung. Ferner kann die Montage der Innen- und Außenausstattung an den einzelnen Fahrhauswänden einfacher parallelisiert werden. Schließlich wird durch das Arbeiten an separaten Wandmodulen anstatt in und unter dem Fahrerhaus zur Montage der Ausstattungen eine ergonomischere Arbeitsweise ermöglicht.

Weitere Einzelheiten und Vorteile der Erfindung werden im Folgenden unter Bezug auf die beigefügten Zeichnungen beschrieben. Es zeigen:
- Figur 1 und Figur 2: schematische Perspektivansichten eines Fahrerhauses eines Nutzfahrzeugs;
- Figur 3: eine schematische Perspektivansicht eines Fahrerhauses eines Nutzfahrzeugs, in der die Kanten der Einzelwandmodule hervorgehoben sind;
- Figur 4: eine Explosionsdarstellung der Ansicht aus Figur 3;
- Figur 5: schematisch ein Ausführungsbeispiel des erfindungsgemäßen Aufbauverfahrens; und
- Figur 6: das Lackieren der Einzelwände gemäß einem Ausführungsbeispiel.

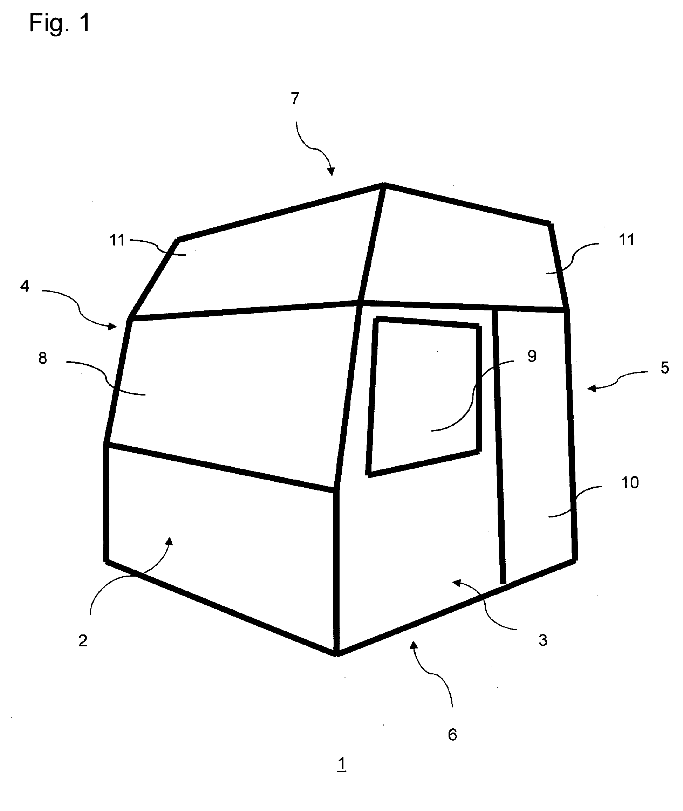

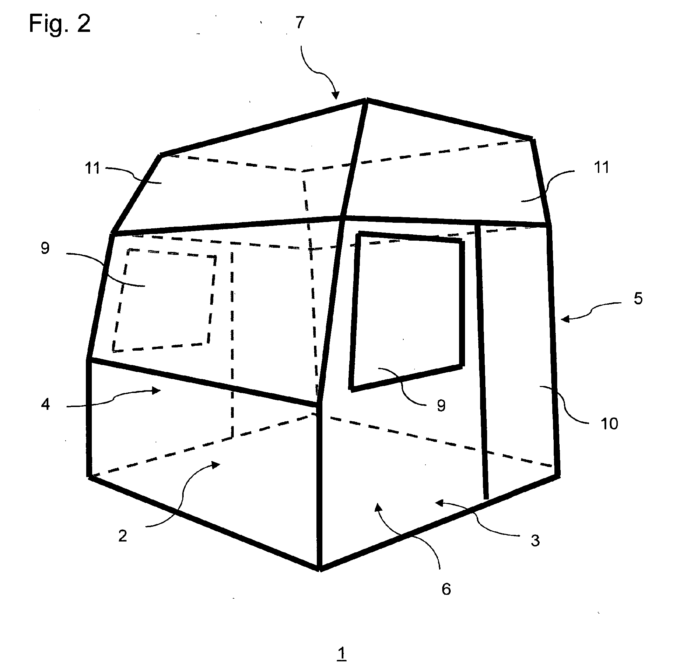

Figur 1 und Figur 2 zeigen eine schematische Perspektivansicht eines modular aufgebauten Fahrerhauses 1. Im Gegensatz zu der Darstellung in Figur 1 sind in der Darstellung der Figur 2 auch die in der gewählten Perspektivansicht nicht sichtbaren Kanten als gestrichelte Linien dargestellt.

Das gezeigte Fahrerhaus 1 besteht aus einer Frontwand 2, zwei gegenüberliegenden Seitenwänden 3, 4, einer Rückwand 5, einem Dachmodul 7 und einer Bodengruppe 6. Die einzelnen Wandmodule 2 bis 7 sind zusammengefügt und bestehen in der Regel aus Stahlblech. Die Seitenwände 3, 4 weisen Aussparungen 8 bis 10 für die Frontscheibe, die Seitenfenster und die Fahrerhaustür auf. Die geformte Dachkonstruktion 7 grenzt an die Seitenwände 3, 4 und an die Front- und Rückwand 2, 5.

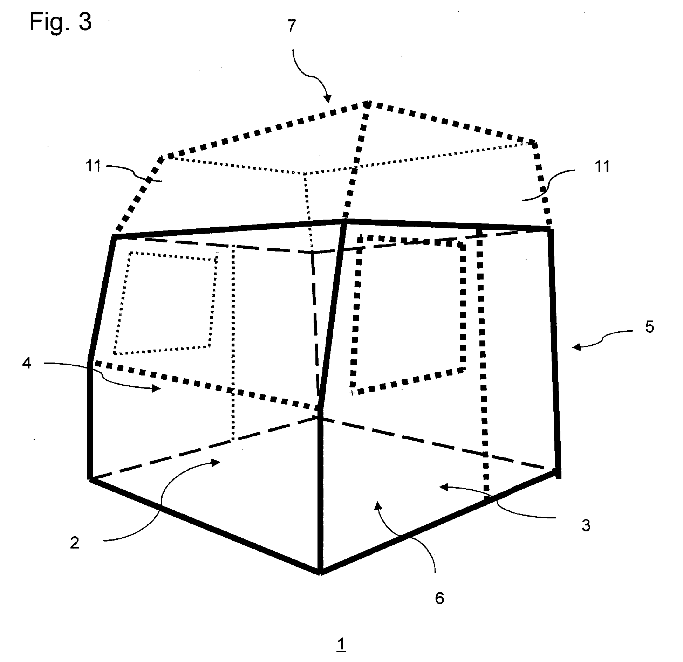

In der Darstellung der Figur 3 sind die Kanten, die jeweils benachbarte Seitenwände 3, 4 begrenzen bzw. verbinden, hervorgehoben dargestellt. Die sichtbaren Verbindungskanten sind in Figur 3 mit dicken durchgezogenen Linien dargestellt, während die in der perspektivischen Ansicht der Figur 3 nicht sichtbaren Verbindungskanten mit gestrichelten Linien dargestellt sind. Die weiteren Kanten des Fahrerhauses, die innerhalb eines Einzelwandmoduls liegen, sind mit gepunkteten Linien dargestellt.

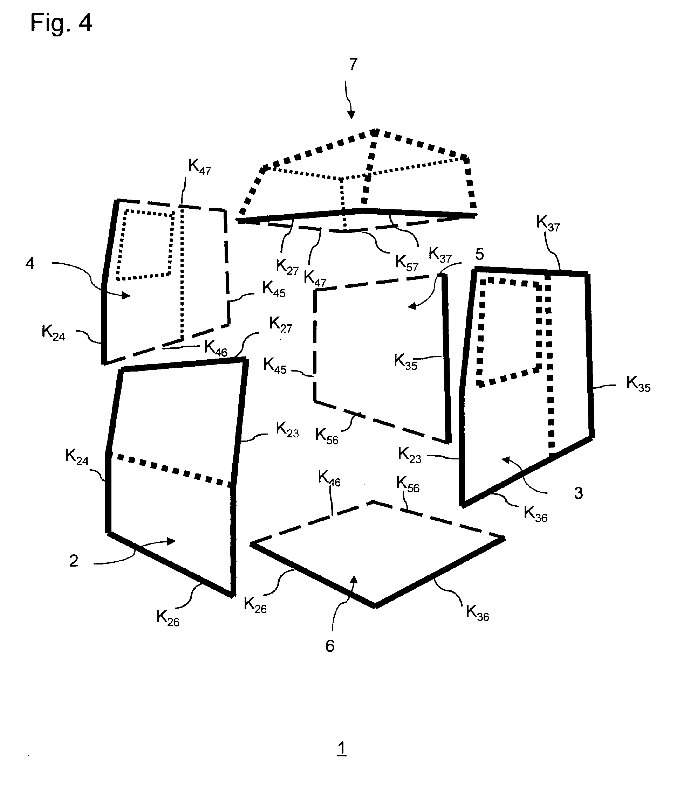

Die modulare Bauweise des Fahrerhauses 1 ist in der Explosionsdarstellung der Figur 4 noch deutlicher ersichtlich, die wiederum den Boden 6, die Front 2, die Rückwand 5, die Seitenwände 3, 4 sowie das Dach 7 des Fahrerhauses 1 zeigt. Die Verbindungskanten zwischen den einzelnen Fahrerhausmodulen sind wie in der Figur 3 mit dicken durchgezogen Linien bzw. gestrichelten Linien gekennzeichnet. Hierbei ist eine Kante K, die eine Fahrerhauswand i mit der Fahrerhauswand j verbindet, als Kante Kᵢⱼ bezeichnet. Beispielsweise ist die untere Kante der Fahrerhausfront 2, die die Front 2 mit dem Boden 6 verbindet, als Kante K₂₆ bezeichnet.

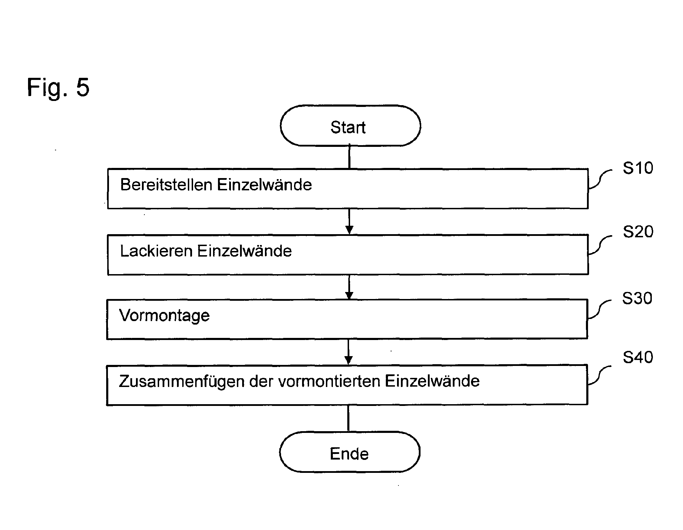

Das Ablaufdiagramm der Figur 5 illustriert beispielhaft ein Aufbauverfahren für das Fahrerhaus 1 gemäß einem Ausführungsbeispiel der Erfindung. Im Schritt S10 werden die Einzelwände 2 bis 7, wie in Figur 4 dargestellt, als unlackierte, nicht ausgestattete geformte Rohbauwände bereitgestellt. Die Seitenwände 3, 4 sind hierbei in zweischaliger Bauweise ausgeführt, bestehend aus einer Innen- und einer Außenwand (nicht gezeigt), die bereits durch Schweißen miteinander verbunden wurden.

Die Fahrerhauswände 2 bis 7 werden anschließend nicht zu einer Fahrerhauskarosserie im Rohbau verbunden, sondern werden im Schritt S20 vorzugsweise als Set lackiert. Hierbei werden die Einzelwände 2 bis 7, mit der Sicht- bzw. der A-Fläche 12 nach oben, horizontal aufgenommen und lackiert. Der Schritt S20 entfällt beispielsweise für diejenigen Einzelwände, die aus einem vorgefärbten Material wie beispielsweise Kunststoff hergestellt werden.

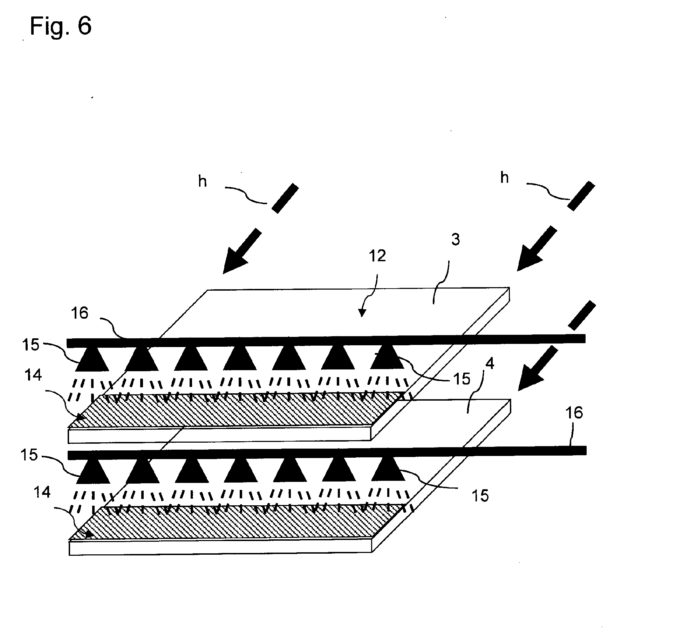

Ein beispielhafter durch die Erfindung ermöglichter Portallackiervorgang ist in der Figur 6 dargestellt. Hierbei werden die Einzelwände, wobei in der vereinfachten Darstellung der Figur 6 nur die Seitenwände 3, 4 dargestellt sind, in horizontaler Ausrichtung mit der Sichtfläche 12 nach oben ausgerichtet und durch eine starr angeordnete Lackierstation in horizontaler Richtung hindurch verfahren. Hierbei sind in Querrichtung zu der horizontalen Verfahrrichtung h der Wandelemente 3, 4 mehrere Lackierpistolen oder Rotationsglocken 15 entlang einer Führungsschiene 16 angeordnet. Das erfindungsgemäße Lackieren vor dem Zusammenfügen des Fahrerhausrohbaus ermöglicht somit eine horizontale Positionierung der A-Flächen 12 im Gegensatz zu herkömmlichen Lackierverfahren, bei dem die A-Flächen vertikal positioniert sind und von einem mehrachsigen Lackierroboter lackiert werden. Durch den horizontalen Lackauftrag, wie in Figur 6 gezeigt, entstehen Lackschichten 14 mit im Wesentlichen keiner Läuferbildung und mit einem besseren Oberflächenverlauf des Farbauftrags. Weiterhin ist ersichtlich, dass durch eine parallele, vertikal versetzte Anordnung der Fahrerhauswände 2 bis 7, diese gleichzeitig lackiert werden können und ein besonders kompakter Aufbau der Lackiervorrichtung ermöglicht wird.

Wie in Figur 5 weiter gezeigt ist, folgt auf den Lackierschritt S20 die Vormontage in Schritt S30 der lackierten Wände 2 bis 7 des Fahrerhauses 1, um die einzelnen Wandelemente 2 bis 7 separat vorzugruppieren. Hierbei werden integrierte und/oder extern vormontierte Funktionsteile der einzelnen Wandelemente als Ein- oder Anbauten, Elektrik- und Elektronikkomponenten etc. mit zugeordneter Verkabelung und/oder Behälter und/oder Aggregate und/oder Bedienelemente und/oder Aerodynamikbauteile und/oder Stauräume und/oder Interieureinbauten auf die einzelnen Wandelemente 2 bis 7 angebracht. Dabei werden die Wandelemente 2 bis 7 vorzugsweise einzeln, voneinander beabstandet aufgehängt. Dadurch sind die Montageflächen leicht zugänglich und können unabhängig voneinander ausgestattet werden. Ein weitere Vorteil ist, dass die Ausstattung der Einzelnwände 2 bis 7 voneinander entkoppelt werden kann und eine bessere Austaktung der einzelnen Montagebänder ermöglicht wird.

Anschließend werden die vormontierten und lackierten Einzelwände 2 bis 7 im Schritt S40 zusammengefügt. Hierbei wird ein Klebeverfahren verwendet, um die Lackschicht nicht durch eine Temperatureinbringung, beispielsweise beim Schweißen, zu beschädigen. Ein derartiges Klebeverfahren ist an sich aus dem Stand der Technik bekannt und daher nicht näher beschrieben. Wie in Figur 5 ersichtlich, entfällt somit bei dem Zusammenbau des Fahrerhauses 1 der Schritt einer Erstellung des Karosserierohbaus. Stattdessen werden die Einzelwände 2 bis 7 separat lackiert und vorgefertigt und vorzugsweise montagefertig als Wandmodule zum kompletten Fahrerhaus 1 gefügt.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich gemäß der Ansprüche fallen. Darüber hinaus beansprucht die Erfindung auch Schutz für den Gegenstand und die Merkmale der Unteransprüche, unabhängig von den in Bezug genommenen Merkmalen und Ansprüchen.

### Bezugszeichenliste:

- 1: Nutzfahrzeug-Fahrerhaus
- 2: Frontwand
- 3,4: Seitenwände
- 5: Rückwand
- 6: Boden
- 7: Dach
- 8: Aussparung für Frontschutzscheibe
- 9: Aussparung für Seitenfenster
- 10: Aussparung für Fahrerhaustür
- 11: Dachseitenfläche
- 12: Sicht- bzw. A-Fläche
- 14: Lackschicht
- 15: Lackierdüse
- 16: Führungsschiene
- h: Horizontale Verfahrrichtung der Seitenwände
- Kᵢⱼ: Seitenfläche, die die Fahrerhauswand i mit der Fahrerhauswand j verbindet

## Patentansprüche

1. Verfahren zum Aufbau eines Nutzfahrzeug-Fahrerhauses (1), umfassend:
Bereitstellen von Einzelwänden (2 bis 7) des Fahrerhauses (1), umfassend eine Frontwand (2), Seitenwände (3, 4), eine Rückwand (5), einen Boden (6) und ein Dach (7);
ein Zusammenfügen der Einzelwände (2 bis 7) zu dem Nutzfahrzeug-Fahrerhaus (1),
wobei eine Farbgebung der Einzelwände vor dem Zusammenfügen der Einzelwände (2 bis 7) zu dem Nutzfahrzeug-Fahrerhaus (1) erfolgt und zumindest eine der Einzelwände (2 bis 7) vor dem Zusammenfügen der Einzelwände (2 bis 7) zu dem Nutzfahrzeug-Fahrerhaus (1) lackiert wird und zum Lackieren unterhalb einer oder einer Vielzahl von Lackierdüsen (15) in horizontaler Richtung verfahren wird.

2. Verfahren nach Anspruch 1, **dadurch gekennzeichnet, dass** zumindest eine der Einzelwände (2 bis 7) aus einem vorbeschichteten Blech gefertigt ist.

3. Verfahren nach einem der vorhergehenden Ansprüche, **dadurch gekennzeichnet, dass** zumindest eine der Einzelwände (2 bis 7) aus einem vorgefärbten Kunststoff oder einem vorgefärbten Verbundwerkstoff gefertigt ist.

4. Verfahren nach einem der vorhergehenden Ansprüche, **dadurch gekennzeichnet, dass** das Zusammenfügen der Einzelwände (2 bis 7) durch ein Niedertemperaturfügeverfahren erfolgt, vorzugsweise durch ein Klebeverfahren.

5. Verfahren nach Anspruch 4, **dadurch gekennzeichnet, dass** an einer Klebestation, an der das Zusammenfügen der Einzelwände (2 bis 7) zum Fahrerhaus (1) erfolgt, zumindest eine Scheibe des Fahrerhauses (1) durch ein Klebeverfahren an einer der Einzelwände (2 bis 7) befestigt wird.

6. Verfahren nach einem der vorhergehenden Ansprüche, **dadurch gekennzeichnet,**
(a) **dass** ein Ausstatten der bereitgestellten Einzelwände (2 bis 7) mit zumindest einem Ausstattungselement nach der Farbgebung der Einzelwände (2 bis 7) und vor dem Zusammenfügen der Einzelwände (2 bis 7) erfolgt; und/oder
(b) **dass** die Einzelwände (2 bis 7) vor dem Zusammenfügen der Einzelwände (2 bis 7) montagefertig vorgruppiert werden.

7. Verfahren nach einem der vorhergehenden Ansprüche, **dadurch gekennzeichnet, dass** zumindest eine Einzelwand (2 bis 7) in horizontaler Ausrichtung mit der Sichtfläche (12) nach oben lackiert wird.

8. Verfahren nach einem der vorhergehenden Ansprüche, **dadurch gekennzeichnet, dass** mindestens zwei Einzelwände (2 bis 7) gleichzeitig lackiert werden.

9. Verfahren nach Anspruch 8, **dadurch gekennzeichnet, dass** die mindestens zwei Einzelwände (2 bis 7) beim Lackieren in paralleler Ausrichtung zueinander und in vertikaler Richtung versetzt lackiert werden.

10. Verfahren nach einem der vorhergehenden Ansprüche, **dadurch gekennzeichnet, dass** die Farbgebung für zumindest eine Einzelwand (2 bis 7) durch Tauchen in ein Farbbecken erfolgt.

11. Verfahren nach einem der vorhergehenden Ansprüche, **dadurch gekennzeichnet, dass** die Seitenwände (3, 4) zweischalig ausgebildet sind, mit einer ersten Schale aus Blech und einer zweiten Schale aus Kunststoff.

12. Verfahren nach einem der vorhergehenden Ansprüche 3 bis11, **dadurch gekennzeichnet, dass** die Einzelwände (2 bis 7) beim Zusammenfügen vor Aufbringen eines Klebemittels derart zueinander positioniert sind, dass an einem Kontaktbereich benachbarter Einzelwände ein Aufnahmebereich und/ oder Spalt für das Klebemittel vorgesehen ist.

13. Verfahren nach einem der vorhergehenden Ansprüche, **dadurch gekennzeichnet, dass** zumindest eine Einzelwand (2 bis 7) fahrzeughersteller-extern bei einem Zulieferer lackiert und montagefertig vorgefertigt wird.

14. Nutzfahrzeug-Fahrerhaus (1), umfassend eine Frontwand (2), Seitenwände (3, 4), eine Rückwand (5), einen Boden (6) und ein Dach (7), hergestellt durch ein Verfahren gemäß einem der vorhergehenden Ansprüche.

## Claims

1. A method for constructing a commercial vehicle-driver's cab (1), comprising:
provision of individual panels (2 to 7) of the driver's cab (1), comprising a front panel (2), side panels (3, 4), a rear panel (5), a floor (6) and a roof (7);
joining the individual panels (2 to 7) together to form the commercial vehicle-driver's cab (1),
wherein a colouring of the individual panels ensues before joining the individual panels (2 to 7) together in order to form the commercial vehicle-driver's cab (1) and at least one of the individual panels (2 to 7) is painted before joining the individual panels (2 to 7) to form the commercial vehicle-driver's cab (1) and for painting is traversed in a horizontal direction below one or a plurality of painting nozzles (15).

2. The method according to Claim 1, **characterized in that** at least one of the individual panels (2 to 7) is fabricated from a pre-coated sheet metal.

3. The method according to one of the preceding claims, **characterized in that** at least one of the individual panels (2 to 7) is fabricated from a pre-dyed plastic or a pre-dyed composite material.

4. The method according to one of the preceding claims, **characterized in that** the individual panels (2 to 7) are joined together by a low-temperature joining method, preferably by an adhesive bonding method.

5. The method according to Claim 4, **characterized in that** at least one window of the driver's cab (1) is fixed to one of the individual panels (2 to 7) by an adhesive bonding method at an adhesive bonding station where the individual panels (2 to 7) are joined together to form the driver's cab (1).

6. The method according to one of the preceding claims, **characterized in that** (a) the individual panels (2 to 7) provided are fitted out with at least one fitment after the colouring of the individual panels (2 to 7) and before the joining the individual panels (2 to 7) together; and/or (b) that the individual panels (2 to 7) are pre-grouped ready for assembly before joining the individual panels (2 to 7) together.

7. The method according to one of the preceding claims, **characterized in that** at least one individual panel (2 to 7) is painted in a horizontal orientation with the visible surface (12) uppermost.

8. The method according to one of the preceding claims, **characterized in that** at least two individual panels (2 to 7) are painted simultaneously.

9. The method according to Claim 8, **characterized in that** when painting at least the two individual panels (2 to 7) are painted in a parallel orientation to one another and offset in a vertical direction.

10. The method according to one of the preceding claims, **characterized in that** at least one individual panel (2 to 7) is coloured by immersion in a paint tank.

11. The method according to one of the preceding claims, **characterized in that** the side panels (3, 4) are of double-skin design, having a first sheet-metal skin and a second skin of plastic.

12. The method according to one of the preceding Claims 3 to 11, **characterized in that** when joining them together the individual panels (2 to 7) are positioned relative to another before applying an adhesive, in such a way that a receiving area and/or a gap for the adhesive is provided in a contact area between adjacent individual panels.

13. The method according to one of the preceding claims, **characterized in that** at least one individual panel (2 to 7) is prefabricated, painted and ready to assemble, by an external supplier remote from the vehicle manufacturer.

14. A commercial vehicle-driver's cab (1), comprising a front panel (2), side panels (3, 4), a rear panel (5), a floor (6) and a roof (7), produced by a method according to one of the preceding claims.

## Revendications

1. Procédé de montage d'une cabine de conducteur de véhicule utilitaire (1), comprenant :
la fourniture de parois individuelles (2 à 7) de la cabine de conducteur (1), comprenant une paroi avant (2), des parois latérales (3, 4), une paroi arrière (5), un plancher (6) et un toit (7) ;
l'assemblage des parois individuelles (2 à 7) pour former la cabine de conducteur de véhicule utilitaire (1),
une peinture des parois individuelles étant réalisée avant l'assemblage des parois individuelles (2 à 7) pour former la cabine de conducteur de véhicule utilitaire (1) et au moins l'une des parois individuelles (2 à 7) étant peinte avant l'assemblage des parois individuelles (2 à 7) pour former la cabine de conducteur de véhicule utilitaire (1) et, pour la peinture, étant déplacée dans la direction horizontale en dessous d'une buse de peinture ou d'une pluralité de buses de peinture (15).

2. Procédé selon la revendication 1, **caractérisé en ce qu'**au moins l'une des parois individuelles (2 à 7) est fabriquée à partir d'une tôle pré-enduite.

3. Procédé selon l'une quelconque des revendications précédentes, **caractérisé en ce qu'**au moins l'une des parois individuelles (2 à 7) est fabriquée à partir d'un plastique préalablement peint ou d'un matériau composite préalablement peint.

4. Procédé selon l'une quelconque des revendications précédentes, **caractérisé en ce que** l'assemblage des parois individuelles (2 à 7) s'effectue par un procédé d'assemblage à basse température, de préférence par un procédé de collage.

5. Procédé selon la revendication 4, **caractérisé en ce qu'**au moins une vitre de la cabine de conducteur (1) est fixée par un procédé de collage à l'une des parois individuelles (2 à 7) au niveau d'un poste de collage au niveau duquel s'effectue l'assemblage des parois individuelles (2 à 7) pour former la cabine de conducteur (1).

6. Procédé selon l'une quelconque des revendications précédentes, **caractérisé en ce que**
(a) un équipement des parois individuelles fournies (2 à 7) avec au moins un élément d'équipement s'effectue après la peinture des parois individuelles (2 à 7) et avant l'assemblage des parois individuelles (2 à 7) ; et/ou
(b) les parois individuelles (2 à 7) son pré-regroupées de manière prête au montage avant l'assemblage des parois individuelles (2 à 7).

7. Procédé selon l'une quelconque des revendications précédentes, **caractérisé en ce qu'**au moins une paroi individuelle (2 à 7) est peinte dans une orientation horizontale avec la surface visible (12) vers le haut.

8. Procédé selon l'une quelconque des revendications précédentes, **caractérisé en ce qu'**au moins deux parois individuelles (2 à 7) sont peintes en même temps.

9. Procédé selon la revendication 8, **caractérisé en ce que** les au moins deux parois individuelles (2 à 7), lors de la peinture, sont peintes suivant une orientation parallèle l'une par rapport à l'autre et de manière décalée dans la direction verticale.

10. Procédé selon l'une quelconque des revendications précédentes, **caractérisé en ce que** la peinture s'effectue pour au moins une paroi individuelle (2 à 7) par immersion dans un bain de peinture.

11. Procédé selon l'une quelconque des revendications précédentes, **caractérisé en ce que** les parois latérales (3, 4) sont réalisées avec une double coque, une première coque étant en tôle et une deuxième coque étant en plastique.

12. Procédé selon l'une quelconque des revendications précédentes 3 à 11, **caractérisé en ce que** les parois individuelles (2 à 7), sont positionnées les unes par rapport aux autres lors de l'assemblage, avant l'application d'un adhésif, de telle sorte qu'au niveau d'une région de contact de parois individuelles adjacentes soit prévue une région de réception et/ou une fente pour l'adhésif.

13. Procédé selon l'une quelconque des revendications précédentes, **caractérisé en ce qu'**au moins une paroi individuelle (2 à 7) est peinte par un fournisseur en dehors de l'atelier du fabricant automobile et est préfabriquée prête au montage.

14. Cabine de conducteur de véhicule automobile (1) comprenant une paroi avant (2), des parois latérales (3, 4), une paroi arrière (5), un plancher (6) et un toit (7), fabriquée par un procédé selon l'une quelconque des revendications précédentes.
